# EUROPÄISCHE PATENTSCHRIFT

(11) **EP 0 758 809 B1**
(45) Veröffentlichungstag und Bekanntmachung des Hinweises auf die Patenterteilung: **16.01.2002**
(21) Anmeldenummer: 96111888.2
(22) Anmeldetag: 24.07.1996
(51) Int. Cl.: H02G 3/04, H02G 3/12

(54) **Brüstungskanal für die Elektroinstallation**
Wall trunking for electrical installation
Canalisation de paroi pour installation électrique

(30) Priorität: 10.08.1995 DE 29512882 U
(43) Veröffentlichungstag der Anmeldung: 19.02.1997
(73) Patentinhaber: Tehalit GmbH & Co. KG, 67716 Heltersberg (DE)
(72) Erfinder: Eberle, Patrick, 66252 Riegelsberg (DE)
(74) Vertreter: Patentanwälte Möll und Bitterich

(56) Entgegenhaltungen:
- DE-U- 9 004 774
- US-A- 4 720 768

## Beschreibung

Die Erfindung betrifft Brüstungskanäle für die Elektroinstallation mit einem Kanalunterteil, das unter einer Fensterbrüstung an einer Gebäudewand zu befestigen ist und an seiner Innenseite wenigstens eine T-förmige Nut besitzt, in der Trennwände, Montagedosen und/oder Elektroinstallationsgeräte verankert werden können, mit einem lösbaren Kanaloberteil und mit wenigstens einem Abstandhalter, der Kanalunter- und -oberteil so auf Abstand hält, daß ein Spalt verbleibt, durch den elektrische Anschlußleitungen zu den Elektroinstallationsgeräten im Inneren des Brüstungskanals geführt werden können, gemäß dem Oberbegriff des Anspruchs 1.

Derartige Brüstungskanäle sind aus der US-A-4 720 768 und der DE-U-900 47 74 bekannt.

Brüstungskanäle sind Elektro-Installationskanäle, die an Gebäudewänden unmittelbar unterhalb der Fensterbrüstung montiert werden. Sie besitzen ein Unterteil, das direkt an die Wand gedübelt wird und an der Innenseite der Rückwand wenigstens eine T-förmige Nut besitzt, in der Trennwände, Montageelemente oder Elektroinstallationsgeräte verankert werden können. Im Kanal werden je nach Bedarf Starkstromleitungen, Schwachstromleitungen und Datenleitungen verlegt und mit den entsprechenden Elektroinstallationsgeräten - Steckdosen, Lichtschalter, Datenschnittstellen, Sicherungen usw. - verdrahtet. Die Elektroinstallationsgeräte werden an den dem jeweiligen Arbeitsplatz entsprechenden Stellen positioniert. Nach Vollendung der Elektroinstallation wird auf das Kanalunterteil ein passendes Kanaloberteil aufgesetzt.

Üblicherweise sind die Installationsgeräte an der Vorderseite des Brüstungskanals direkt zugänglich. Deswegen müssen die Brüstungskanäle höher montiert sein als die Oberseiten der Einrichtungsgegenstände. Lassen die Fensterbrüstungen jedoch eine so hohe Montage nicht zu, müssen die Einrichtungsgegenstände mit einem ausreichenden Abstand zu den Brüstungskanälen aufgestellt werden, wodurch Platz verlorengeht.

Neben Brüstungskanälen, bei denen die Installationsgeräte von außen zugänglich sind, gibt es auch Brüstungskanäle, bei denen die Installationsgeräte ganz im Inneren des Kanalunterteils montiert sind und das Kanaloberteil eine völlig glatte Front besitzt. Abstandsbleche zwischen Kanalunter- und -oberteil sorgen dafür, daß ein ausreichender Spalt zwischen beiden verbleibt, durch den beispielsweise Elektroanschlußleitungen geführt werden können. Diese Brüstungskanäle bieten im fertig montierten Zustand einen ästhetischen Anblick. Will jedoch beispielsweise die Putzfrau abends das Büro putzen, muß sie zum Anschließen des Staubsaugers das Kanaloberteil abziehen. Dies ist äußerst unbefriedigend.

Um die Zugänglichkeit zu den Installationsgeräten zu erleichtern, lassen sich manche handelsübliche Kanaloberteile gegenüber den Unterteilen verschwenken. Deshalb müssen auch hier die Brüstungskanäle entweder oberhalb der Einrichtungsgegenstände montiert oder die Einrichtungsgegenstände mit Abstand zu den Brüstungskanälen aufgestellt werden.

Der vorliegenden Erfindung liegt die Aufgabe zugrunde, einen Brüstungskanal der gattungsgemäßen Art dahingehend weiterzuentwickeln, daß Elektroinstallationsgeräte auch ohne vorheriges Abnehmen des Kanaloberteils zugänglich sind und daß das Abnehmen und Aufsetzen des Kanaloberteils auch bei unmittelbar herangerückten Einrichtungsgegenständen möglich ist.

Diese Aufgabe wird gelöst durch einen Brüstungskanal mit den Merkmalen des Anspruchs 1.

Dank der erfindungsgemäßen Merkmalskombination ergeben sich die Vorteile, daß das Kanaloberteil von oben auf das Kanalunterteil aufgesteckt werden kann, so daß der für die Schwenkbewegung erforderliche Freiraum völlig entfällt, daß die in die erfindungsgemäß ausgestalteten Abstandhalter eingebauten Elektroinstallationsgeräte auch ohne Abnehmen des Kanaloberteils leicht zugänglich sind und daß die Abstandhalter dank der durchgehenden zweiten T-Nut an jeder für die Zugänglichkeit der Installationsgeräte optimalen Position fixiert werden können.

Gemäß einer vorteilhaften Weiterbildung sind Schaft und/oder Kopf des Ankerzapfens so dimensioniert, daß sie mit den Wandteilen der zweiten T-Nut metallischen Kontakt haben. Auf diese Weise läßt sich ohne zusätzliche Maßnahmen der für die elektrische Sicherheit erforderliche Potentialausgleich herstellen.

Gemäß einer vorteilhaften Ausgestaltung der Erfindung ist in der unteren Leiste des Abstandhalters eine Öffnung eingebracht, durch die der T-Kopf des Verschlußelementes hindurchführbar ist. Dies erlaubt die einfache Montage des Verschlußelements am Abstandhalter.

Vorteilhafterweise besteht der Abstandhalter aus Stahlblech.

Anhand der Zeichnung soll die Erfindung in Form von Ausführungsbeispielen näher erläutert werden. Es zeigen
- Fig. 1: eine perspektivische Darstellung eines vor einer Fensterbrüstung montierten Brüstungskanals und
- Fig. 2 bis 4: einen Abstandhalter in Seitenansicht, Frontansicht und Draufsicht.

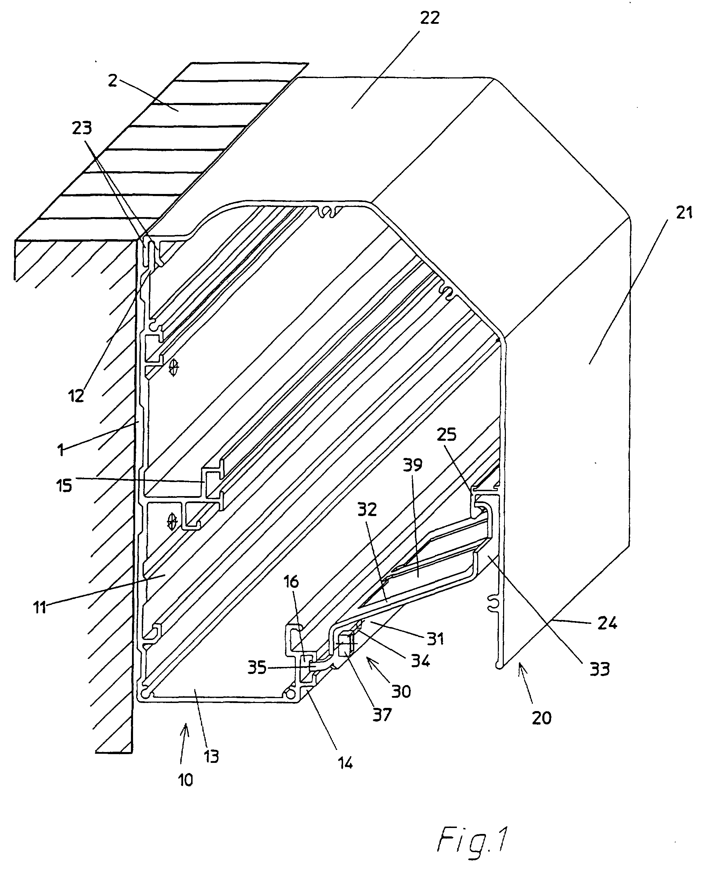

Fig. 1 zeigt rein schematisch ein Stück einer Gebäudewand 1 mit Fensterbrüstung 2. Unterhalb der Fensterbrüstung 2 und direkt an diese anschließend ist ein Brüstungskanal montiert, bestehend aus einem Kanalunterteil 10, einem Kanaloberteil 20 und einem Abstandhalter 30.

Das Kanalunterteil 10 besteht im wesentlichen aus einer Rückwand 11, einer Bodenwand 13 und einer Frontwand 14. An der Innenseite der Rückwand 11 ist eine Schiene vorgesehen mit einer T-förmigen Nut 15, in der Trennwände, Montagedosen und/oder Elektroinstallationsgeräte verankert werden können.

Eine zweite Schiene mit einer T-förmigen Nut 16 ist an der Frontwand 14 vorgesehen.

Auf das Kanalunterteil 10 ist senkrecht von oben das Kanaloberteil 20 aufgesteckt. Dieses besteht aus einer Vorderwand 21 und einer Deckenwand 22 sowie einer Steckvorrichtung 23 zum Aufstecken auf die Oberkante 12 der Rückwand 11 des Kanalunterteils 10, die zu diesem Zweck leicht gekröpft ist.

An der Innenseite der Vorderwand 21 des Kanaloberteils 20 ist eine Winkelleiste 25 so befestigt, daß eine nach unten offene Nut entsteht. Dank Winkelleiste 25 und Halteeinrichtung 23 kann das Kanaloberteil 20 senkrecht von oben und ohne Schwenkbewegung auf das Kanalunterteil 10 aufgesteckt werden.

In die zweite T-Nut 16 ist ein Abstandshatteblech 30 eingesetzt und mittels eines Verschlußelements 37 in Form eines Drehknebels mit T-förmigem Kopf fixiert. Kanalunterteil 10, Abstandshalteblech 30 und Kanaloberteil 20 sind so aufeinander abgestimmt, daß die Winkelleiste 25 den Abstandhalter 30 übergreift und sich eine ausreichend stabile Halterung ergibt.

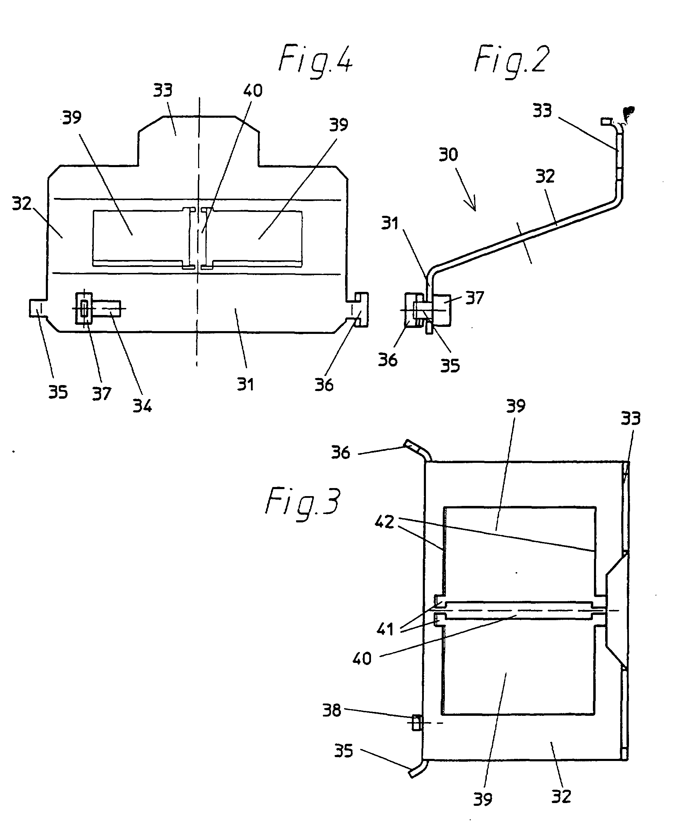

Einzelheiten des Abstandhalters 30 zeigen die Fig. 2 bis 4.

Der Abstandhalter 30 ist ein etwa Z-förmig gebogenes Blech, beispielsweise Stahlblech, mit einer unteren Leiste 31, einer oberen Leiste 33 und einem Steg 32. Der Steg 32 besitzt beispielhaft zwei öffnungen 39, in die Elektroinstallationsgeräte (nicht dargestellt) so eingesetzt werden können, daß sie bei komplett montiertem Brüstungskanal (Fig. 1) von unten durch den Spalt zwischen der Frontwand 14 des Kanalunterteils und der Unterkante 24 des Kanaloberteils 20 zugänglich sind.

Der Abstandshalter 30 weist einen Mittelsteg 40 auf, der den Einbau von zwei Einfachgeräten ermöglicht. Durch die spezielle Formgebung 41 kann der Mittelsteg 40 leicht herausgebrochen werden, ohne daß die Bruchstelle nachgearbeitet werden muß, da die Bruchstelle außerhalb der vom Einbaugerät belegten Fläche liegt.

An der unteren Leiste 31 des Abstandhalters 30 ist einerseits ein Ankerzapfen 36 mit einem T-förmigen Kopf, andererseits ein einfacher Justierzapfen 35 angeformt. Die Abmessungen dieser beiden Zapfen 35, 36 sind so auf die zweite T-Nut 16 abgestimmt, daß ein metallischer und ausreichend niederohmiger elektrischer Kontakt entsteht, so daß beim Einsetzen des Abstandhalters 30 in die T-Nut 16 ohne zusätzliche Maßnahmen der für die elektrische Sicherheit erforderliche Potentialausgleich hergestellt wird. Dies beschleunigt die Arbeit auf der Baustelle und senkt die Kosten.

Zur Fixierung des Abstandhalters 30 in der T-Nut 16 ist ein Verschlußelement 37 in Form eines Drehknebels mit einem T-förmigen Kopf 38 vorgesehen. Eine öffnung 34, die auf den Kopf 38 abgestimmt ist, ermöglicht das Einsetzen des Verschlußelements 37. Die Verankerung in der T-Nut 16 erfolgt durch Drehen des Verschlußelements 37, 38 an jeder für den jeweiligen Anwendungsfall optimalen Position.

## Patentansprüche

1. Brüstungskanal für die Elektro-Installation mit einem Kanalunterteil (10), das unter einer Fensterbrüstung (1) an einer Gebäudewand (2) zu befestigen ist, aus einer Rückwand (11), einer Bodenwand (13) und einer Frontwand (14) besteht und an der Innenseite der Rückwand (11) eine etwa T-förmige Nut (15) aufweist, in der Trennwände, Montagedosen und/oder Elektroinstallationsgeräte verankert werden können, mit einem Kanaloberteil (20), das auf das Kanalunterteil (10) aufsetzbar ist und aus einer Vorderwand (21), einer Deckenwand (22) sowie einer Halteeinrichtung (23) besteht, und mit wenigstens einem Abstandhalter (30), der die Vorderwand (21) des Kanaloberteils (20) auf Abstand zur Frontwand (14) des Kanalunterteils (10) hält, wobei zwischen Kanalunter- und -oberteil (10, 20) ein Spalt verbleibt, durch den elektrische Anschlußleitungen zu den Elektroinstallationsgeräten geführt werden können, **dadurch gekennzeichnet, daß** an der Frontwand (14) eine weitere T-förmige Nut (16) vorgesehen ist, daß der Abstandhalter (30) aus einem etwa Z-förmig abgewinkelten Blech mit einer unteren Leiste (31), einer oberen Leiste (33) und einem Steg (32) besteht, daß an der unteren Leiste (31) einerseits ein Ankerzapfen (36) mit einem T-förmigen Kopf, andererseits ein Justierzapfen (35) angeformt ist, die beide mit der zweiten T-Nut (16) korrespondieren, daß in die untere Leiste (31) weiterhin ein Verschlußelement (37) mit T-förmigem Kopf (38), der ebenfalls mit der zweiten T-Nut (16) korrespondiert, drehbar eingesetzt ist, daß der Steg (32) wenigstens eine Öffnung (39) zur Aufnahme von Elektroinstallationsgeräten aufweist, daß die Halteeinrichtung (23) als Steckverbindung ausgebildet ist und daß an der Innenseite der Vorderwand (21) eine Winkelleiste (25) angebracht ist, die über die obere Leiste (33) greift.

2. Brüstungskanal nach Anspruch 1, **dadurch gekennzeichnet, daß** der Schaft und/oder Kopf des Ankerzapfens (36) mit den Wandteilen der zweiten T-Nut (16) metallischen Kontakt hat.

3. Brüstungskanal nach Anspruch 1 oder 2, **dadurch gekennzeichnet, daß** in der unteren Leiste (31) eine Öffnung (34) eingebracht ist, durch die der T-Kopf (38) des Verschlußelements (37) hindurchführbar ist.

4. Brüstungskanal nach einem der Ansprüche 1 bis 3, **dadurch gekennzeichnet, daß** der Abstandhalter (30) aus Stahlblech besteht.

5. Brüstungskanal nach einem der Ansprüche 1 bis 4, **dadurch gekennzeichnet, daß** der Steg (32) des Abstandshalters (30) zwei Öffnungen (39) besitzt, die durch einen Mittelsteg (40) getrennt sind, und daß der Mittelsteg (40) oben und unten je eine Sollbruchstelle (41) besitzt.

6. Brüstungskanal nach Anspruch 5, **dadurch gekennzeichnet, daß** die Sollbruchstellen (41) außerhalb der vom Installationsgerät eingenommenen Fläche positioniert sind.

## Claims

1. Dado trunking for electrical installation, with a trunking lower part (10), which is to be fastened below a window sill (1) to a building wall (2), consists of a rear wall (11), a bottom wall (13) and a front wall (14) and comprises at the inside of the rear wall (11) an approximately T-shaped slot (15), in which partitions, assembly boxes and/or electrical installation appliances can be fixed, with a trunking upper part (20), which can be mounted on the trunking lower part (10) and consists of a front wall (21), a covering wall (22) as well as a retaining device (23), and with at least one spacer (30), which holds the front wall (21) of the trunking upper part (20) at a distance from the front wall (14) of the trunking lower part (10), wherein a gap remains between the trunking lower and upper part (10, 20), through which gap the electric connection lines to the electrical installation appliances can be passed, **characterised in that** a further T-shaped slot (16) is provided at the front wall (14), that the spacer (30) consists of a metal sheet, bent approximately in the shape of a Z, with a lower strip (31), an upper strip (33) and a web (32), that an anchor pin (36) with a T-shaped head is moulded onto the lower strip (31) on one side and an adjusting pin (35) on the other side, these two corresponding to the second T-slot (16), that a closure element (37) with a T-shaped head (38), which likewise corresponds to the second T-slot (16), is rotatably inserted in the lower strip (31), that the web (32) comprises at least one opening (39) for receiving the electrical installation appliances, that the retaining device (23) is formed as a plug-in connection, and that an angle strip (25) is fitted on the inside of the front wall (21), which strip engages over the upper strip (33).

2. Dado trunking according to Claim 1, **characterised in that** the shank and/or head of the anchor pin (36) has metallic contact with the wall parts of the second T-slot (16).

3. Dado trunking according to Claim 1 or 2, **characterised in that** an opening (34) is made in the lower strip (31 ), through which opening the T-head (38) of the closure element (37) can be passed.

4. Dado trunking according to anyone of Claims 1 to 3, **characterised in that** the spacer (30) consists of steel sheet.

5. Dado trunking according to anyone of Claims 1 to 4, **characterised in that** the web (32) of the spacer (30) has two openings (39) which are separated from one another by a central web (40), and that the central web (40) has a respective predetermined breaking point (41) at the top and bottom.

6. Dado trunking according to Claim 5, **characterised in that** the predetermined breaking points (41) are positioned outside of the area occupied by the installation appliance.

## Revendications

1. Goulotte d'installation électrique avec une partie inférieure de goulotte (10), qui doit être fixée sous un appui de fenêtre (1) à une paroi de bâtiment (2), qui se compose d'une paroi arrière (11), d'une paroi de base (13) et d'une paroi frontale (14) et présente sur la face intérieure de la paroi arrière (11) une gorge (15) approximativement en forme de T, dans laquelle des parois de séparation, des prises de courant de montage et/ou des appareils d'installation électriques peuvent être ancrés, avec une partie supérieure de goulotte (20), qui peut être posée sur la partie inférieure de gaine (10) et qui se compose d'une paroi avant (21), d'une paroi de plafond (22) ainsi que d'un dispositif de retenue (23) et avec au moins une entretoise (30), qui maintient la paroi avant (21) de la partie supérieure de la gaine (20) à distance par rapport à la paroi frontale (14) de la partie inférieure de la goulotte (10), un interstice demeurant entre les parties inférieure et supérieure de la goulotte (10, 20), à travers lequel des lignes de raccordement électriques peuvent être amenées aux appareils d'installation électriques, **caractérisée en ce qu'**est prévue sur la paroi frontale (14) une autre gorge (16) en forme de T, **en ce que** l'entretoise (30) se compose d'une tôle pliée approximativement en forme de Z avec une barrette inférieure (31), une barrette supérieure (33) et une barre intermédiaire (32), **en ce que** sur la barrette inférieure (31) sont façonnés d'une part une cheville d'ancrage (36) avec une tête en forme de T, d'autre part une cheville d'ajustage (35), qui correspondent toutes deux à la deuxième gorge en T (16), **en ce que** dans la barrette inférieure (31) un élément de blocage (37) avec tête en forme de T (38), qui correspond également à la deuxième gorge en T (16), est inséré et monté pivotant, **en ce que** la barre (32) présente au moins une ouverture (39) destinée au logement d'appareils d'installation électriques, **en ce que** le dispositif de retenue (23) est constitué en tant que fiche de raccordement et **en ce que** sur la face intérieure de la paroi avant (21) une barrette coudée (25) est formée, qui prend appui sur la barrette supérieure (33).

2. Goulotte selon la revendication 1, **caractérisée en ce que** la tige et/ou la tête de la cheville d'ancrage (36) a un contact métallique avec les parties verticales de la deuxième gorge en T (16).

3. Goulotte selon la revendication 1 ou 2, **caractérisée en ce que** dans la barrette inférieure (31) une ouverture (34) est aménagée, à travers laquelle la tête en T (38) de l'élément de blocage (37) peut être passée.

4. Goulotte selon l'une des revendications 1 à 3,
**caractérisée en ce que** l'entretoise (30) se compose d'une tôle d'acier.

5. Goulotte selon l'une quelconque des revendications 1 à 4, **caractérisée en ce que** la barre (32) de l'entretoise (30) possède deux ouvertures (39), qui sont séparées par une barrette centrale (40) et **en ce que** la barrette centrale (40) possède en haut et en bas respectivement un point destiné à la rupture (41).

6. Goulotte selon la revendication 5, **caractérisée en ce que** les points destinés à la rupture (41) sont positionnés en dehors de la surface occupée par l'appareil d'installation.
